Europäisches Patentamt

European Patent Office

Office européen des brevets

(19)

(11) EP 0 926 806 A2

(12) EUROPEAN PATENT APPLICATION

(43) Date of publication:
30.06.1999 Bulletin 1999/26

(51) Int Cl.⁶: H02K 21/12

(21) Application number: 98830717.9

(22) Date of filing: 30.11.1998

(84) Designated Contracting States:
AT BE CH DE DK ES FI FR GB GR IE IT LI LU MC
NL PT SE
Designated Extension States:
AL LT LV MK RO SI

(30) Priority: 12.12.1997 IT GO970021

(71) Applicant: Novelli, Flavio
34077 Ronchi dei Legionari Gorizia (IT)

(72) Inventor: Novelli, Flavio
34077 Ronchi dei Legionari Gorizia (IT)

(54) **Electric machine with rotating field and double air gap**

(57)   The machine proposed here fits in the category of synchronous machines with rotating field. The machine consist of a stator and a rotor. The stator is composed of two concentric toroidal shapes : the external tore is similar to the stator of a synchronous machine, the internal tore is similar to the rotor on an induction machine . The air gap between the two stators is such to allow for the insertion of the rotor . The rotor is formed of by either permanent magnets made of neodimium or electromagnets. The machine is symmetrical with respect to a plane passing through the central magnet support disk .

The symmetri guarantees greater stability however the machine is completely operational even if only one half side is developed. The external stator house the coils which produce the rotating field. This can be reinforced by eventually placing coils on the internal stator according to the project design to be realized . The rotor magnets are blocked by a squirrel cage structure which , during start-up , facilitates synchronization . Startup is obtained through an electronic variable frequency generator which provides greater elasticity in the number of rotations desired .

The advantage of the double air gap is that it doubles the attraction betwen magnets and rotating field. The machine, when hooked to a prime mover, becomes a generator.

FIG. 5

## Description

The proposed machine fits into the category of Synchronous Motors with Rotating Field . The innovations presented herewith make the machine original and are particularly suitable for naval applications and for light traction in such that the increase of electromagnetic force with respect to a normal machine, permits the reduction of the number of revolutions per second . At present date no similar machine exists in alternating current and rotating field. Direct Currrent machines with transversal flows do exist and so does a version in alternating current but, due to the difference in shape , especially of the magnetic steel, these tend to be heavier.

Construction of the machine consists of a stator on which are mounted the excitation windings to form the rotating field and a rotor formed primarily from neodymium permanent magnets.

The stator of the new machine proposed is similar to that of a synchronous machine in terms of how the rotating field is formed however it is much more complex with regards to the ferrous component .

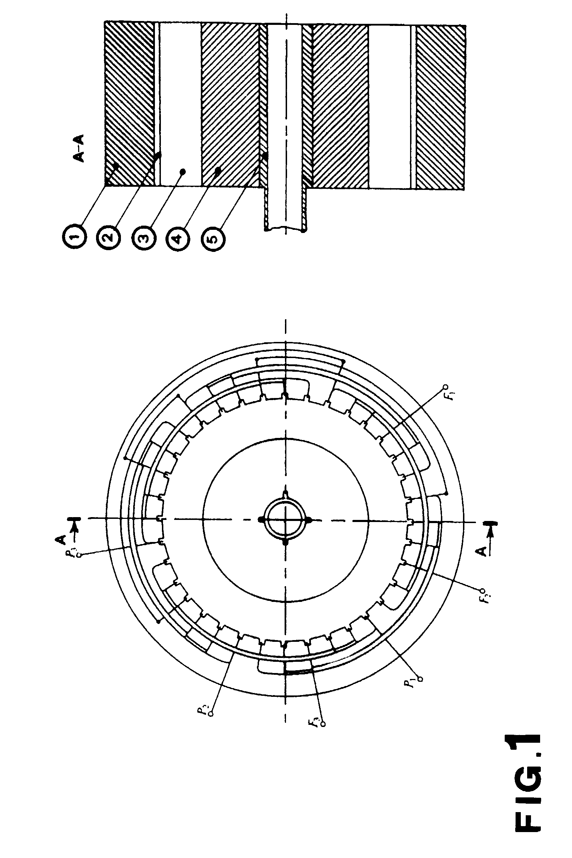

In fact, the stator consist of an external part, where the excitation windings are placed to create the rotating field and by an internal part, toroidal in shape . Depending on the type of machine one wishes to obtain it is possible to place the stator excitation windings on the toroidal part. This saves the copper part if the external windings are not used . It is also possible to intensify the magnetic field by using both excitation systems contemporarily. The stator, articulated in two concentric toroidal shapes, is supported and blocked by an external casing which also supports, with the bearings, the rotor shaft and magnets. See fig. 1. In order to avoid eddy currents the stator is laminated .

Fig. 1 shows the two toroidal shapes (1-4) with slots (2), situated for simplicity's sake,on the external stator only. The windings which produce the rotating magnetic field can also be seen . The windings are crossed by three sinusoid currents which are displaced in phase from each other by 120 electrical degrees . This, combined with the way the windings are placed in the slots, generates a rotating electromagnetic field. In this arrangement the windings are placed in three slots per pole and per phase creating two pair of poles, or a tetrapolar, machine . Fig. 1 also shows the end part of the internal support tube for the internal stator (5). The excitation windings are not shown in the lateral view . The thickness of the internal tore is greater than the external one in order to maintain the density of the magnetic flux and keep the magnetic mass at nearly constant level .

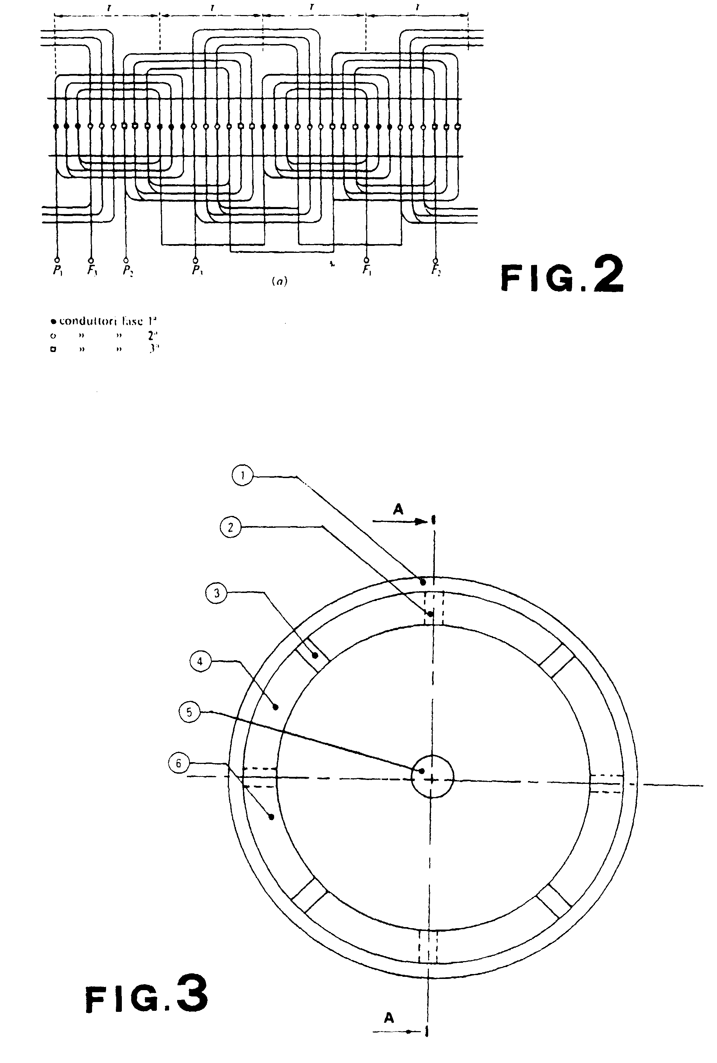

Fig. 2 shows a spiral three phase winding configuration with three slots per pole and per phase normally used for a three phase tetrapolar machine.

Fig. 3 shows a frontal view of the rotating part of a machine .

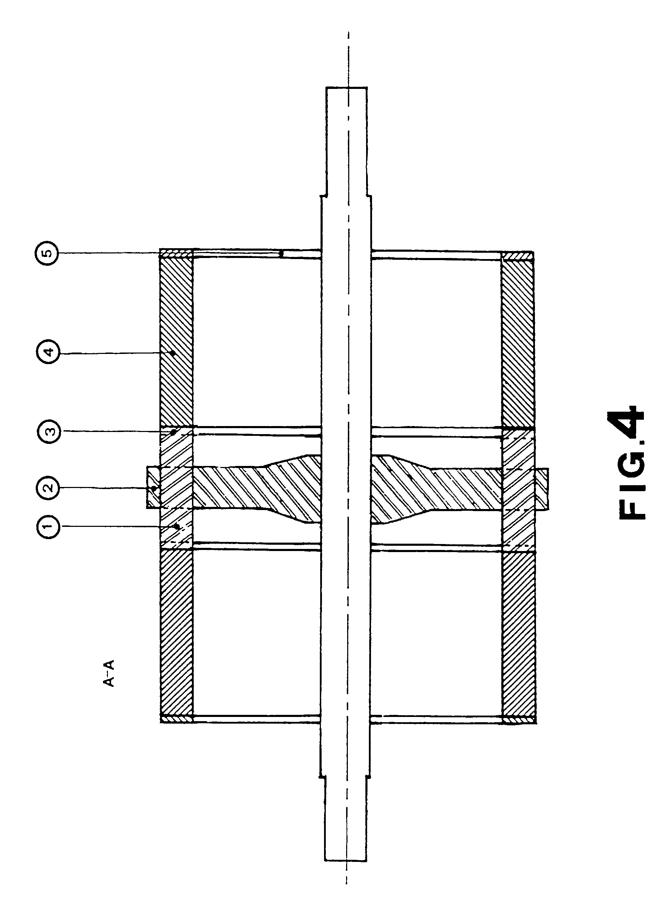

Fig. 4, view of section A-A in fig. 3, clearly shows that the rotor is formed by a shaft, a support disk for the magnets ( 2 ), a squirrel cage structure reinforced by connecting spokes attached to the support disk and permanent magnets ( 4 ) or electromagnets depending on the choice of design specifications .

The shaft is supported by two bearings inserted in the support frame of the machine . A disk is mounted at the center of the shaft. This disk serves to transmit the force exerted between the magnets and the rotating magnetic field to the shaft . The magnets are blocked by a cage which has both mechanical and electrical properties . From a mechanical point of view a cage structure is more robust than a single separately blocked magnet .

From an electrical view, the support structure is seat of induced electromotive force . This EMF causes electric currents generating a magnetic field which tend to drag the rotor into rotation , facilitating the alignment between the magnetic field generated by the magnets and the rotating magnetic field. In other words, during start up the behavior of the cage is similar to that of an induction machine . It is obvious that during steady state the cage is no longer seat of induced EMF because thre is no variation in linkage flux In this case the cage's only function is mechanical to drag the disk .

## Electrical Performance of Machine .

Having briefly, described the primary components of the machine ( secondary aspects such as screws , bolts , welds etc... have been omitted from the description) , we now go on to describe in detail the electrical performance of the machine . The machine's operation is similar to that of a synchronous machine in that a rotating magnetic field must be produced through the application of sinusoidal currents properly displaced .

In the example presented here the rotating magnetic field is three phase but a two phase machine operates in the same way . Since the stator of the machine consists of two concentric toroidal shapes, it is possible to distibute the slots with the magnetic field generating coils on both tores, or on just one of the two according to the desired project design. It should be fairly obvious that the double tore makes it possible to increase the intensity of the rotating magnetic fiel due to the greater distributio surface or the turns . The speed of rotation of the magnet field depends on the frequency of the currents circulating in the coils as well as on the number and arrangement of the coils themselves. Therefore, the machine needs an electronic frequency converter during start up in order to synchronize it to the network. Should it be possible to start the machine at no load or with a limited load, all that is necessary is to start it like an induction machine whit subsequent automatic phasing of the rotating field .

As stated earlier the machine can operate both with permanent magnets or with electromagnets. From an electrical point of view there is no difference in their performance.

There is however a significant difference in cost, weight and size of the machine . Currently the only magnets available on the marchet have a residual induction equal to 1.1 - 1.2 Tesla which implies higher production costs with respect to electromagnets however the advantage in terms of weight is significant because the magnets are lower density compared to iron and do not require excitation windings on the rotor .

The machine is symmetrical with respect to a plane passing through the support disk on the cage holding the magnets . This symmetry is not indispensable as the machine works perfectly even with just one side however, for greater mechanical equilibrium. a symmetrical form is preferable .

The equations used in the design are those normally used for rotating magnetic fields . In order to calculate the electromagnetic force which is generated between the rotating field and the magnets the following formula is applied :

$$F = [h * d/2 \, \mu_0] * 4 * B_0 * B_m$$

This is the maximum force exerted between a magnet and the rotating field .

The terms in the formula have the following significance :

$h$ = length of magnet
$d$ = efficient air gap from magnetic point of view = effective air gap + ( $1 / M_m$ ) $S_m$ where:
$M_m$ = permeability of the magnet
$S_m$ = thickness of the magnet
$\mu_0$ = permeability of the void
$B_0$ = no load induction in the air gap
$B_m$ = induction due to magnet

The formula was tested experimentally and the results were found to be realistic and satisfactory such to justify development of the design .

For the first phase of verification of the functionality of the machine a model was developed by converting a 4 pole 0,2 HP monophase induction motor .

The model works perfectly although only one half side was developed using 0,17 tesla ferrite magnets making load testing difficult to perform .

From a theoretical viewpoint the increase in real potential of the motor was 40 - 50 % or more according to the density of current used in the project .

When attached to a pime motor the machine is trasformed into a synchronous generator :

It is useful if the shape of the magnets or electromagnets is such to generate a sinusoidal induced voltage in the induction windings .

The internal connection in a three phase machine will be either Y connection or $\Delta$ connection accord-

ing to construction constraints . The same may be said of the type of winding used in the internal stator .

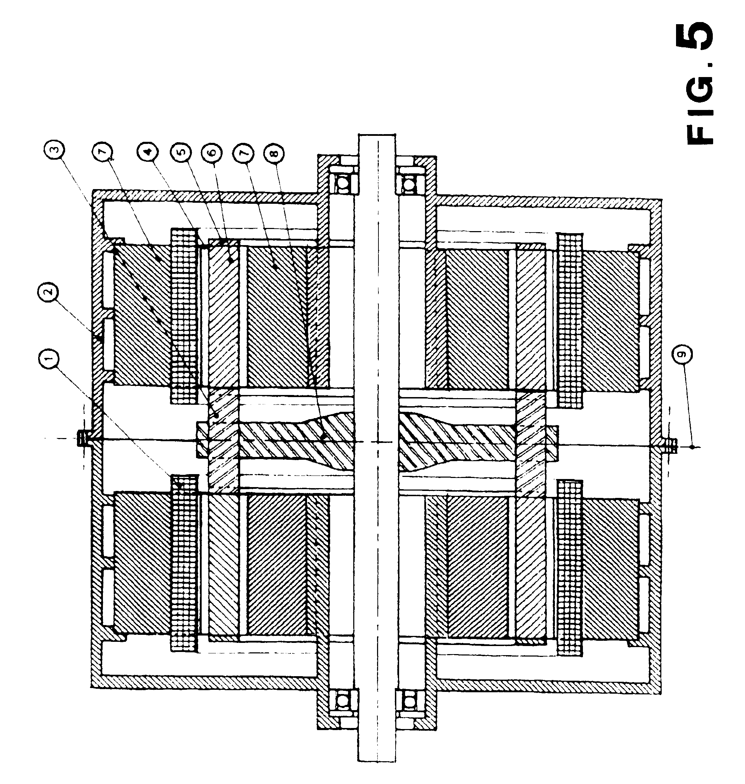

Fig. 5 shows a section of an assembled machine ( rotor + stator ) . All of the essential parts are visible : stator excitation windings ( For simplicity's sake the windings on the internal stator have not been drawn . It is also possible to install a second squirrel cage structure on the internal stator which would serve to produce an additional flow linked to the principal flow. ) the frame ( articulated in two symmetrical halves, serves as protection and support ) the magnet support brace , the double air gap ( which serves primarily to actuate the attraction force between the permanent magnet and rotating field . In this case the force is double with respect to a traditional machine ) the magnet blocking rings ( which together with the spokes form the squirrel cage), the permanent neodymium magnets, the two stator stacks ( which are obviously made from laminations ) and the support disk ( which serves to transmit to the shaft the force which develops between magnets and rotating field . ) The cooling system has been omitted as it is not fundamental to understanding the machine's operation .

# LEGEND

Fig. 1

    1) External stator
    2) Slot
    3) Air Gap
    3) Internal Stator
    4) Support tube for internal stator

Fig. 2
Spiral winding for three phase tetrapolar synchronous Machine with three slots per pole and per phase
Fig. 3

    1) Transmission support disk
    2) Posterior support spoke
    2) Magnet blocking spoke
    3) Magnet blocking ring
    4) Transmission shaft
    5) Permanent magnets

Fig. 4

    1) Internal reinforcement spoke
    2) Reinforcing disk
    3) Internal magnet support ring
    4) Permanent magnets
    5) External magnet support ring

Fig. 5

    1) Stator winding
    2) Frame

3) Magnet support brace
4) Air Gap
5) Magnet support ring
6) Permanent magnet
7) Laminated stator pack
8) Magnet support disk

**Claims**

1. electric machine able to operate as either motor or generator according to the application, characterized by the fact that it is equipped with permanent magnets or electromagnets whit double air gap per magnet. See fig. 1 - 3 - 4 ;

2. electric machine as per para. 1, characterized by a magnet retaining cage used during start-up . Cage is made of steel or any other material adapt for this purpose, as in fig.4 or similar ;

3. electric machine as per para. 1 - 2 characterized by its symmetry with respect to a plane passing through the central magnet support disk ;

4. electric machine as per para. 1-2-3 and in which the internal stator is characterized by the fact that it can house coils, to integrate the external coils used to create a rotating field , or a squirrel cage structure ;

5. electric machine as per para. 1-2-3-4 characterized by the fact that the machine's performance remains unchanged even if only one half, either left or right with respect to a plane passing through the central disk, is constructed ;

6. electric machine as para. 1-2-3-4-5 in which the number of magnets, or electromagnets, will depend on the number of coils on the stator ;

7. electric machine as para. 1-2-3-4-5-6 in which the ferromagnetic materials, non ferromagnetic materials, sintered materials and non sintered materials (green) shall be determined just prior to construction for each single machine in order to optimize their specific use ;

8. electric machine as para. 1-2-3-4-5-6-7 in which uses an electronic variable frequency generator or not according to need during start up ;

9. electric machine as para. 1-2-3-4-5-6-7-8 in which the central disk, may be substituted with a system of spokes in steel or other material useful for supporting magnets ;

10. electric machine meeting all of the above claims and matching the description and illustrations presented herewith and for the uses specified .

**FIG.1**

**FIG.2**

- conduttori fase 1ª
- o    »    »    2ª
- □    »    »    3ª

**FIG.3**

A-A

FIG.4

FIG. 5